# EUROPÄISCHE PATENTSCHRIFT

(11) **EP 0 393 362 B1**
(45) Veröffentlichungstag und Bekanntmachung des Hinweises auf die Patenterteilung: **01.06.1994**
(21) Anmeldenummer: 90105087.2
(22) Anmeldetag: 17.03.1990
(51) Int. Cl.: A23G 1/00, A23G 1/02, A23G 1/04, A23L 2/38

(54) **Verfahren zum Herstellen von Kakao-Extrakt**
Process for the production of cocoa extract
Procédé pour la production d'un extrait de cacao

(30) Priorität: 19.04.1989 DE 3912819
(43) Veröffentlichungstag der Anmeldung: 24.10.1990
(73) Patentinhaber: Kraft Jacobs Suchard SA, CH-8008 Zürich (CH)
(72) Erfinder: Culmsee, Ortwin, Dr., D-2875 Ganderkesee (DE); Weyersbach, Bernd, D-2800 Bremen 1 (DE)
(74) Vertreter: Bolte, Erich, Dipl.-Ing.

(56) Entgegenhaltungen:
- DE-A- 2 342 177
- DE-A- 3 131 530
- PATENT ABSTRACTS OF JAPAN, Band 11, Nr. 85(C-410)(2532) 14 März 1987; & JP-A-61239872 (Naozo Kishida) 25.10.1986
- PATENT ABSTRACTS OF JAPAN, Band 12, Nr. 230 (C-508), 29. Juni 1988; & JP-A-6322146 (Morinaga & Co. Ltd.) 29.01.1988

## Beschreibung

Die Erfindung betrifft ein Verfahren zum Herstellen von Kakaoextrakt, bei dem Kakao bei erhöhter Temperatur einer Extraktion mit Wasser unterworfen wird und sodann der wässrige Extrakt einerseits und der von wasserlöslichen Bestandteilen befreite Kakao andererseits voneinander getrennt werden.

Aus der DE-A- 2 342 177 ist ein Verfahren zur Kakaoverarbeitung bekannt, bei dem ein wässeriger Extrakt aus ungeröstetem Kakaobruch gewonnen wird. Die Extraktion wird bei einer Temperatur von 70° C - 135° C ausgeführt. Da Kakaobruch einen verhältnismäßig hohen Fettgehalt (ca. 60 Gew.-%) aufweist und Kakaobutter bereits bei etwa 30° C schmelzflüssig wird, gelangt bei den verhältnismäßig hohen Extraktionstemperaturen Fett in den Extrakt. Des weiteren ist nachteilig, daß die Extraktion bei diesem bekannten Verfahren in einem bewegten Extraktionsbett ausführt wird. Der Kakaobruch wird während der Extraktion durch eine Förderschnecke transportiert. Dies führt zu einem erhöhten Anfall von Feststoffen im Extrakt.

Der Erfindung liegt die Aufgabe zugrunde, ein Verfahren zum Herstellen von Kakaoextrakt vorzuschlagen, durch das ein wasserlöslicher, nahezu fettfreier Extrakt mit verbesserten organoleptischen Eigenschaften und mit geringem Anteil an Festsubstanzen gewonnen werden kann.

Zur Lösung dieser Aufgabe ist das erfindungsgemäße Verfahren durch folgende Merkmale gekennzeichnet:
a) als Ausgangsmaterial wird (gerösteter) Kakaokern-Bruch eingesetzt,
b) der Kakaokernbruch wird in einem ruhenden Festbett mit Wasser extrahiert, wobei das Wasser die Kakao-Nibs von oben nach unten durchströmt,
c) die Extraktion wird bei einer Temperatur zwischen 40°C und 100°C, vorzugsweise bei etwa 70°C, ausgeführt,
d) die Extraktion wird bei Atmosphärendruck ausgeführt.

Die Behandlung von Kakaokernbruch in einem ruhenden Festbett während des Extraktionsverfahrens und die Durchströmung des Festbetts von oben nach unten bewirken überraschenderweise eine deutliche Reduzierung von Feststoffpartikeln im Extrakt. Die gewählte Extraktionstemperatur hat einen deutlich verminderten Anteil von Fett im Extrakt zur Folge.

Gemäß einem weiteren Vorschlag der Erfindung werden zur Extraktion Kakao-Nibs mit einer Teilchengröße von etwa 5 mm bis 8 mm im Durchmesser eingesetzt. Vor Beginn der Extraktion werden die Kakao-Nibs mit Wasser vorgequollen. Zur Erhöhung der Leistungsfähigkeit wird die Extraktion in einem Karussellextrakteur im Gegenstrom durchgeführt.

Weitere Merkmale der Erfindung sind Gegenstand von Unteransprüchen.

Fortsetzung der Beschreibung: Seite 2 der EP-A-393 362, beginnend mit Zeile 35: "Eine apparative einfache Vorrichtung.." bis zum Schluß der Beschreibung Seite 4, Zeile 39 einschließlich.

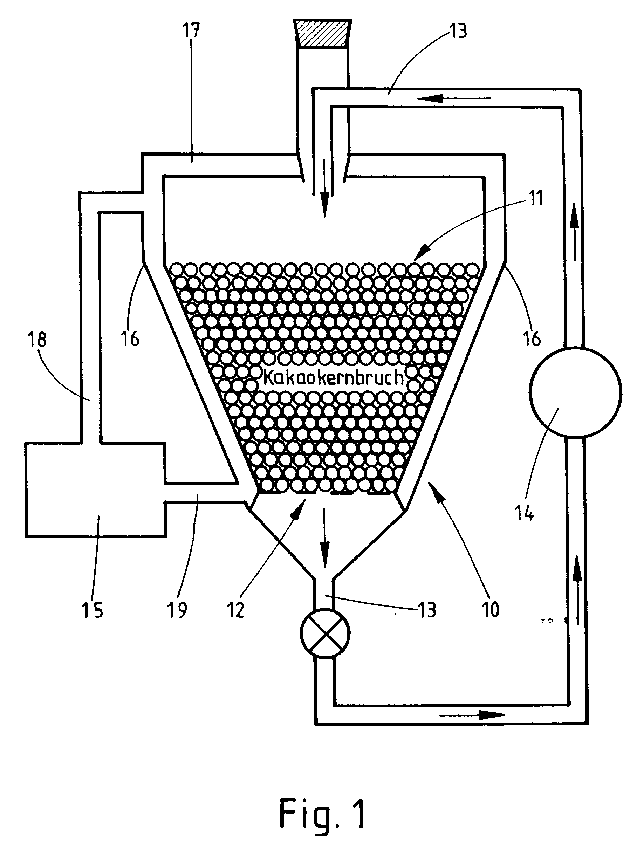

Eine apparative einfache Vorrichtung zur Durchführung des erfindungsgemäßen Verfahrens ist in Fig. 1 schematisch dargestellt. Eine konische, trichterförmige Kolonne 10 enthält eine Charge Kakaokernbruch 11 als Festbett. Die Kolonne 10 ist im unteren Bereich mit einem Siebboden bzw. einer Schlitzfritte 12 versehen. Unterhalb der Schlitzfritte 12 verengt sich die Kolonne 10 stark und mündet in eine Leitung 13, in der wäßriger Extrakt mittels einer Pumpe 14 befördert wird. Die Leitung 13 endet im oberen Bereich der Kolonne 10 und ist dort vorzugsweise mit einer Düse versehen, die Wasser bzw. wäßrigen Extrakt auf den Kakaokernbruch versprühen kann. Die Wände 16 der Kolonne 10 sind im Bereich oberhalb der Schlitzfritte doppelwandig ausgebildet. Der so gebildete Hohlraum 17 ist mit einem Heizmedium, beispielsweise Wasser, gefüllt. Über Leitungen 18 und 19 wird das Heizmedium zu- oder abgeleitet. Die Temperatur des Heizmediums kann durch einen Thermostaten 15 reguliert werden.

Zur Durchführung des erfindungsgemäßen Verfahrens wird der Kakaokernbruch 11 in der Kolonne 10 mit Wasser, das durch die Leitung 13 in die Kolonne geführt wird, berieselt. Das Wasser durchströmt den Kakaokernbruch und nimmt Kakaoinhaltsstoffe auf. Die so entstehende wäßrige Extraktlösung tritt durch die Schlitzfritte 12 aus der Kolonne aus, gelangt in die Leitung 13 und wird mittels Umwälzpumpe 14 in den oberen Bereich der Kolonne 10 transportiert und auf den Kakaokernbruch aufgebracht. Die Temperatur wird bei der Extraktion auf einem Wert zwischen 40°C und 100°C gehalten.

Nachfolgend wird das erfindungsgemäße Verfahren, insbesondere in der oben beschriebenen verfahrenstechnischen Ausführungsform, anhand eines Beispiels näher erläutert.

### Beispiel 1

250 g Kakaonibs (Kakaokernbruch, 2 % Wasser) werden in eine konische, trichterförmige Kolonne gefüllt und mit 750 g Wasser bei 73°C 2,5 h extrahiert.

Nach Beendigung der Extraktion liegen vor:
543,3 g wäßriger Kakao-Extrakt mit
23,1 g gelösten Kakao-Extraktstoffen (=Extraktkonzentration 4,25 %)
456,7 g ausgelaugter wasserhaltiger Kakaokernbruch, bestehend aus
234,8 g Wasser und
221,9 g Trockensubstanz
Die Ausbeute an Kakao-Extraktstoffen aus den eingesetzten Kakaonibs beträgt 9,2 %.

Eine Steigerung der Extraktausbeute läßt sich durch eine kontinuierliche Gestaltung des Verfahrens mit mehreren hintereinandergeschalteten Kolonnen, durch die Extraktgut und Wasser im Gegenstrom hindurchlaufen, erreichen.

Verfahrenstechnische Vorteile bei der Durchführung des erfindungsgemäßen Verfahrens bietet der Einsatz eines sogenannten Karussellextrakteurs, der einen kontinuierlich nach dem Gegenstromprinzip arbeitenden Perkolationsapparat darstellt.

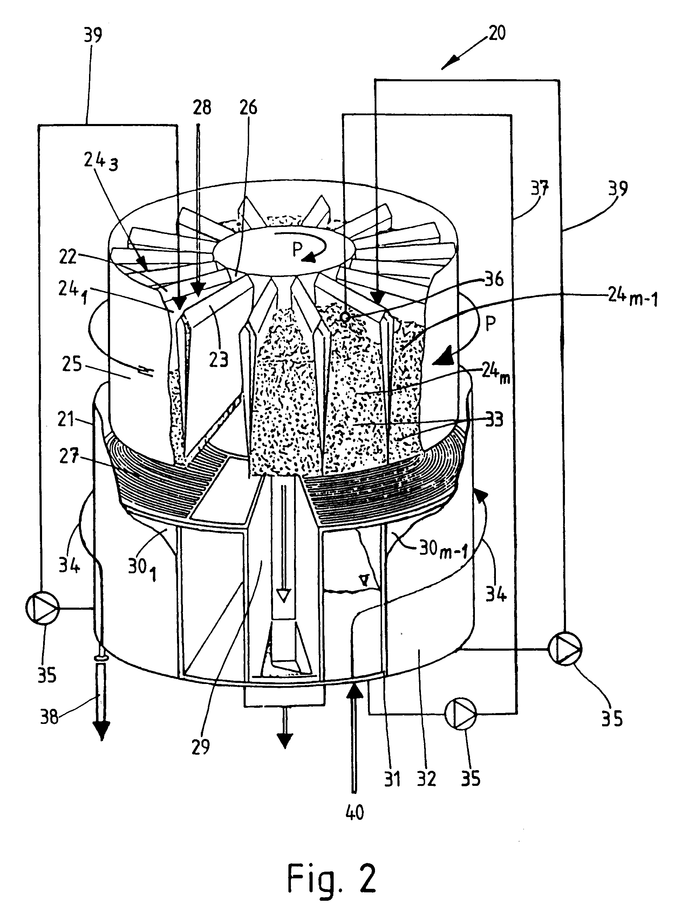

Fig. 2 zeigt eine schematisierte perspektivische Darstellung eines Karussellextrakteurs. Anhand von Fig. 2 wird die Erfindung in einer verfahrenstechnisch besonders geeigneten Ausführungsform näher erläutert.

Wie aus Fig. 2 ersichtlich, umfaßt ein Karussellextrakteur 20 ein Gehäuse 21, in welchem mehrere, von einer gemeinsamen Achse radial sich erstreckende Zellwände angeordnet sind, von denen in Fig. 2 nur zwei Zellwände mit den Bezugsziffern 22 und 23 gekennzeichnet sind. Diese Zellwände 22 und 23 bilden divergierende Seitenwände einer ersten Zelle 24₁, die weiterhin von einer Außenwand 25 und einer Innenwand 26 begrenzt ist. Der feststehende Schlitzboden 27 ist flüssigkeitsdurchlässig, wobei die Schlitze in ihren Abmessungen dem Extraktionsgut angepaßt sind.

Unter dem feststehenden Schlitzboden 27 sind Auffangkammern 30₁ usw. vorgesehen, deren Gesamtzahl der der Zellen 24₁ usw. entspricht. Die Auffangkammern 30 sind mit Trennwänden 31 versehen und weisen eine gemeinsame Außenwand 32 auf.

An die in Fig. 2 gezeigte Zelle 24₁ mit Kammer 30₁ schließen sich mehrere Extraktionszellen mit darunter liegenden Auffangkammern an. Die Extraktionszellen sind jeweils mit einer Berieselungseinrichtung, bestehend aus Pumpe 35, Leitung 39 (in Fig. 2 nur für die Zelle 24₁ dargestellt), Wärmetauscher, Sprühkopf (nicht gezeigt) ausgestattet. In der Auffangkammer befindet sich ein Ventil, das durch einen Schwimmer gesteuert wird und mit der Pumpe 35 und einer Gegenstromleitung 34 in Verbindung steht. Die Gegenstromleitung 34 mündet jeweils in die vorhergehende Auffangkammer. So mündet z. B. in die Kammer 30₃ die Gegenstromleitung 34 der Kammer 30₄ usw. Durch diese Anordnung wird ein Flüssigkeitsstrom erzeugt, der zum einen über die Berieselungseinrichtung einen Kreuzstrom darstellt, zum anderen einen entgegen der Transportrichtung der Zellen 24 (Pfeil p in Fig. 2) gerichteten Gegenstrom umfaßt. Der letzten Extraktionszelle 24ₘ₋₁ kann eine sogenannte Waschzelle 24ₘ nachgeordent sein, über der ein Sprühkopf 36 angeordnet ist, welcher über ein Ventil mit einer Waschwasserleitung 37 in Verbindung steht.

Nach der Waschzelle 24ₘ weist der Boden 27 einen Austragungsausschnitt 29 auf, so daß beim Weitertransportieren der Zellen der Zelleninhalt durch diesen Ausschnitt 29 nach unten in einen Austrag fallen und abgeführt werden kann.

Im Detail läuft das Verfahren folgendermaßen ab:
Der über einen Eintrag 28 dem Karussellextrakteur 20 zugeführte Kakaokernbruch 33 wird in der ersten Zelle 24₁ vorgequollen. Anschließend wird der Karussellextrakteur drehend angetrieben. Die Zellen werden dabei in einem definierten Takt um jeweils eine Kammerbreite bzw. Zellenbreite weitergerückt. Der in der Waschzelle 24ₘ befindliche Kakaokernbruch wird mit Frischwasser beregnet, das in die darunter liegende Auffangkammer gelangt. Durch die Flüssigkeitszugabe steigt das Flüssigkeitsniveau in der letzten Auffangkammer bis zu einem Niveau, bei welchem das zugehörige Ventil geöffnet wird und Flüssigkeit in die davor liegende Auffangkammer 30ₘ₋₁ gefördert wird. Gleichzeitig wird die in der Kammer befindliche Flüssigkeit mittels Pumpe 35 zum Sprühkopf 36 geführt und durchrieselt die in der Kammer 24ₘ₋₁ befindliche Menge an Kakaokernbruch. Die Pumpe 35 ist hinsichtlich ihrer Fördermenge so gesteuert, daß die Beregnungs- bzw. Rezirkulationsmenge geringer ist als die Perkolationsrate.

Durch die Niveauregulierungen in den Auffangkammern, die den davorliegenden Extraktionszellen zugeordnet sind, ergibt sich ein Flüssigkeitsstrom, wobei die Flüssigkeit eine von Kammer zu Kammer steigende Extraktkonzentration aufweist. In der ersten Auffangkammer 30₁ (Fig. 2) befindet sich somit eine Extraktlösung mit maximalem Extraktgehalt, wobei das Flüssigkeitsniveau in der ersten Kammer 30₁ über das vom Schwimmer gesteuerte Ventil konstant gehalten wird, da bei steigendem Pegel eine der zugeführten Flüssigkeitsmenge entsprechende Extraktmenge über die Leitung 38 abgeführt wird.

Kurz vor Ende der Taktzeit werden alle Pumpen 35 abgestellt, und die Niveauregulierung in den Auffangkammern wird außer Kraft gesetzt. Somit wird die gesamte Flüssigkeitsmenge in jeder Stufe in der jeweiligen Auffangkammer gesammelt. Nach dem Abtropfen der Flüssigkeit, das eine einstellbare Zeit andauert, wird der Antrieb des Extrakteurs wieder angestellt, und die Zellen werden um eine Kammer weitergefahren. Während der Stillstandszeit der Pumpen 35 ist das Ventil zur Regelung der Waschwasserzufuhr abgestellt. Wenn die Zellen ihre neue Position erreicht haben, werden alle Pumpen 35 wieder eingeschaltet, wobei zunächst die Niveauregelung unwirksam gehalten wird.

Das folgende Beispiel 2 veranschaulicht das beanspruchte Verfahren, durchgeführt in einem Karussellextrakteur:

### Beispiel 2

### Betrieb des Karussellextrakteurs

| | |
|---|---|
| Wasserzulauf | 42,5 kg/h |
| Füllung je Zelle | 7,5 kg Kakaokernbruch (mit 2 % Wasser) |
| Taktzeit | 45 min |
| Extraktionstemperatur | 73°C |
| Prozeßdauer | 41,4 h (ohne Ein- und Ausfahrphase) |

### Bilanz der Extraktion

34,2 kg/h wäßriger Kakao-Extrakt mit
1,4 kg gelösten Kakao-Extraktstoffen
18,3 kg/h ausgelaugter wasserhaltiger Kakaokernbruch, bestehend aus
9,9 kg Wasser und
8,4 kg Trockensubstanz.

Die Konzentration des anfallenden wäßrigen Extrakts beträgt 4,8 %. Die Ausbeute an Extraktstoffen liegt bei 14,0 %.

Die bei der Extraktion anfallende wäßrige Lösung von Kakaoinhaltsstoffen wird vorzugsweise konzentriert. Dies geschieht durch Anwendung an sich bekannter Verfahren wie Verdampfen des Lösungsmittels im Vakuum, Gefriertrocknung, Sprühtrocknung. Dabei kann der wasserlösliche Extrakt in eine konzentrierte wäßrige Form oder in Pulverform übergeführt werden. Der erfindungsgemäß hergestellte Extrakt eignet sich zur Herstellung von Instant- und Fertiggetränken, als Aroma- und/oder Farbstoff für Genußmittel.

Der extrahierte Kakaokernbruch läßt sich vorzugsweise nach dem Trocknen einer weiteren Verwendung zuführen. Beispielsweise eignet er sich zur Gewinnung einer speziellen Kakaomasse und/oder Kakaobutter.

## Patentansprüche

1. Verfahren zum Herstellen von Kakaoextrakt, bei dem Kakao bei erhöhter Temperatur einer Extraktion mit Wasser unterworfen wird und sodann der wässrige Extrakt einerseits und der von wasserlöslichen Bestandteilen befreite Kakao andererseits voneinander getrennt werden, **gekennzeichnet durch** folgende Merkmale:
a) als Ausgangsmaterial wird (gerösteter) Kakaokern-Bruch eingesetzt,
b) der Kakaokernbruch wird in einem ruhenden Festbett mit Wasser extrahiert, wobei das Wasser die Kakao-Nibs von oben nach unten durchströmt,
c) die Extraktion wird bei einer Temperatur zwischen 40°C und 100°C, vorzugsweise bei etwa 70°C, ausgeführt,
d) die Extraktion wird bei Atmosphärendruck ausgeführt.

2. Verfahren nach Anspruch 1, dadurch gekennzeichnet, daß als Kakaokernbruch Kakaonibs mit einer Teilchengröße von ca. 5 mm bis 8 mm im Durchmesser, einschbließlich etwaiger Anteile an Kakaostaub, eingesetzt werden.

3. Verfahren nach Anspruch 1 oder 2, dadurch gekennzeichnet, daß der Kakaokernbruch vor bzw. mit beginnender Extraktion mit Wasser vorgequollen wird.

4. Verfahren nach einem oder mehreren der vorangehenden Ansprüche, dadurch gekennzeichnet, daß die Extraktion mit mehreren hintereinander geschalteten Kolonnen als Gegenstromextraktion durchgeführt wird.

5. Verfahren nach einem oder mehreren der vorangehenden Ansprüche, dadurch gekennzeichnet, daß die Extraktion mit einem sogenannten Karussellextrakteur im Gegenstrom durchgeführt wird.

6. Verfahren nach einem oder mehreren der vorangehenden Ansprüche, dadurch gekennzeichnet, daß der anfallende wäßrige Extrakt konzentriert wird.

7. Verfahren nach Anspruch 6, dadurch gekennzeichnet, daß der anfallende wäßrige Extrakt bis zur Trocknung eingeengt wird.

8. Verfahren nach einem oder mehreren der vorangehenden Ansprüche, dadurch gekennzeichnet, daß der extrahierte Kakaokernbruch getrocknet wird.

## Claims

1. Process for producing cocoa extract, in which cocoa is subjected at relatively high temperature to extraction with water and then the aqueous extract on the one hand and the cocoa freed of water-soluble constituents on the other hand are separated from one another, characterized by the following features:
a) (roasted) broken cocoa seeds are used as starting material,
b) the broken cocoa seeds are extracted with water in a static fixed bed, the water flowing through the cocoa nibs from the top downwards,
c) the extraction is carried out at a temperature of between 40°C and 100°C, preferably at about 70°C
d) the extraction is carried out at atmospheric pressure.

2. Process according to Claim 1, characterized in that cocoa nibs with a particular size of approximately 5mm to 8mm in diameter, including some fractions of cocoa powder, are used as broken cocoa seeds.

3. Process according to Claim 1 or 2, characterized in that the broken cocoa seeds are pre-swollen with water before or at the start of extraction.

4. Process according to one or more of the preceding claims, characterized in that the extraction is carried out as counter flow extraction with a plurality of columns connected in series.

5. Process according to one or more of the preceding claims, characterized in that the extraction is carried out in counter flow with a so-called revolving extractor.

6. Process according to one or more of the preceding claims, characterized in that the aqueous extract obtained is concentrated.

7. Process according to Claim 6, characterized in that the aqueous extract obtained is concentrated to dryness.

8. Process according to one or more of the preceding claims, characterized in that the extracted broken cocoa seeds are dried.

## Revendications

1. Procédé de préparation d'extrait de cacao, dans lequel du cacao est, à une température élevée, soumis à une extraction par de l'eau, l'extrait aqueux, d'une part, et le cacao libéré de constituants solubles dans l'eau, d'autre part, étant alors mutuellement séparés, caractérisé par les particularités suivantes :
a) on met en oeuvre, comme matière de départ, des brisures de graines de cacao (torréfiées),
b) les brisures de graines de cacao sont extraites par de l'eau dans un lit fixe, l'eau passant à travers les fèves de cacao décortiquées de haut en bas,
c) l'extraction est effectuée à une température comprise entre 40°C et 100°C, de préférence à environ 70°C,
d) l'extraction est effectuée à une pression atmosphérique.

2. Procédé suivant la revendication 1, caractérisé en ce que, comme brisures de graines de cacao, on met en oeuvre des fèves de cacao décortiquées ayant une dimension de particule d'environ 5 mm à 8 mm de diamètre, y compris d'éventuelles fractions de poussière de cacao.

3. Procédé suivant l'une des revendications 1 et 2, caractérisé en ce que les brisures de graines de cacao sont préalablement gonflées avec de l'eau avant l'extraction ou au début de celle-ci.

4. Procédé suivant une ou plusieurs des revendications précédentes, caractérisé en ce que l'extraction est effectuée sous la forme d'une extraction à contre-courant avec plusieurs colonnes montées l'une derrière l'autre.

5. Procédé suivant une ou plusieurs des revendications précédentes, caractérisé en ce que l'extraction est effectuée en contre-courant avec ce que l'on appelle un extracteur à carrousel.

6. Procédé suivant une ou plusieurs des revendications précédentes, caractérisé en ce que l'extrait aqueux formé est concentré.

7. Procédé suivant la revendication 6, caractérisé en ce que l'extrait aqueux formé est concentré jusqu'au séchage.

8. Procédé suivant l'une ou plusieurs des revendications précédentes, caractérisé en ce que les brisures de graines de cacao extraites sont séchées.
